# EUROPÄISCHE PATENTSCHRIFT

(11) **EP 0 410 014 B1**
(45) Veröffentlichungstag und Bekanntmachung des Hinweises auf die Patenterteilung: **05.01.1994**
(21) Anmeldenummer: 89113539.4
(22) Anmeldetag: 22.07.1989
(51) Int. Cl.: G01L 9/04

(54) **Druckaufnehmer und Verfahren zur Kalibrierung von Druckaufnehmern**
Pressure sensor and method for the calibration of pressure sensors
Capteur de pression et procédé pour calibrer des capteurs de pression

(43) Veröffentlichungstag der Anmeldung: 30.01.1991
(73) Patentinhaber: HOTTINGER BALDWIN MESSTECHNIK GMBH, D-64201 Darmstadt (DE)
(72) Erfinder: Hellwig, Reimar, Dr., D-6105 Ober-Ramstadt (DE); Wägner, Ralf, D-6097 Trebur (DE)
(74) Vertreter: Brandt, Ernst-Ulrich, Dipl.-Phys., Dipl.-Ing.

(56) Entgegenhaltungen:
- US-A- 3 035 240
- US-A- 4 133 100
- US-A- 4 376 929

## Beschreibung

Die Erfindung bezieht sich auf einen Druckaufnehmer mit einer druckempfindlichen Membran mit einem verdickten Innenbereich und einem verdickten Randbereich, zwischen denen mehrere fest mit der Membran verbundene und Dehnungsmeßfühler aufweisende Meßbalken kreuzartig angeordnet sind.

Ein Druckaufnehmer der eingangs genannten Art ist aus der DE-OS 22 63 901 bekannt. Dieser Druckaufnehmer weist eine druckempfindliche Membran mit einem verdickten Innenbereich und einem verdickten Randbereich auf. Zwischen Innenbereich und Randbereich erstrecken sich stegförmige, hochkant stehende Meßbalken konstanten Querschnitts, die kreuzartig angeordnet fest mit der Membran verbunden sind und die auf Scherung beansprucht werden. In einer weiteren Ausführung sind zwei auf Scherung beanspruchte Meßbalken mit sich veränderndem Balkenquerschnitt vorgesehen. Die Meßbalken sind mit Dehnungsmeßstreifen versehen, die die Verformungen messen. Derartige Druckaufnehmer weisen zwar eine höhere Empfindlichkeit im Vergleich zu Druckaufnehmern mit einer Membran ohne Meßbalken auf, jedoch ist auch bei derartigen Druckaufnehmern die erzielbare Linearität begrenzt.

Der Erfindung liegt die Aufgabe zugrunde, einen Druckaufnehmer der eingangs genannten Art zu schaffen, der neben einer hohen absoluten Genauigkeit eine besonders gute Linearität aufweist und der aufgrund seiner Kennwerte als Kalibrierreferenz eingesetzt werden kann.

Erfindungsgemäß ist zur Lösung dieser Aufgabe vorgesehen, daß die Meßbalken als Biegebalken ausgebildet sind, die einen längs der Erstreckung sich verändernden Balkenquerschnitt mit einem zwischen den dem Innenbereich und dem Randbereich benachbarten Biegbalkenabschnitten mit größerem Querschnitt liegenden Bereich kleinsten Querschnitts aufweisen - Anspruch 1; Anspruch 15 Verfahren zur Kalibrierung.

In der DE-OS 22 63 901 finden sich Darlegungen, denen zu entnehmen ist, daß Meßumformer, die mit auf Biegung beanspruchten Meßbalken arbeiten, solchen mit auf Scherung beanspruchten Meßbalken unterlegen sind.

Obwohl bei der Erfindung von dem als nachteilig bezeichneten Biegebalkenprinzip Gebrauch gemacht wird, hat sich überraschenderweise gezeigt, daß mit dem erfindungsgemäßen Druckaufnehmer ausgezeichnete Meßeigenschaften erreicht werden. Durch die Ausgestaltung der Meßbalken als Biegebalken und aufgrund des sich von beiden Seiten bis etwa zur Mitte des Biegebalkens hin definiert verjüngenden Querschnitts ergibt sich eine ausgezeichnete Linearität. Die Verformung des bzw. der Biegebalken kann durch die Querschnittsbemessung gezielt beeinflußt werden. Der Querschnitt kann dabei vorteilhaft durch mechanische Bearbeitung der Höhe - gemessen von der Membranfläche - und/oder Veränderung der Breite der Biegebalken eingestellt werden; dies erlaubt in vorteilhafter Weise eine Justierung durch einfache mechanische Bearbeitung der der Membran abgewandten Biegebalkenflächen oder eine Einflußnahme über die Formgebung der Seitenflächen der Biegebalken.

Bei einer vorteilhaften Weiterbildung der Erfindung ist vorgesehen, daß sich der Biegebalkenquerschnitt vom Innenbereich und vom Randbereich aus kontinuierlich verjüngt.

Vorteilhaft im Hinblick auf die erzielbare Genauigkeit ist eine einstückige Ausbildung des Meßkörpers aus Membran und Biegebalken ohne Verbindungsbereiche mit nicht definierten Einflüssen.

Fertigungstechnisch günstig ist eine Ausgestaltung der Erfindung, bei der der im wesentlichen scheibenförmige Meßkörper die Biegebalkenlängsseiten und den Innen- und Randbereich begrenzende Vertiefungen in der der Membran abgewandten Stirnseite aufweist. Dabei ist es besonders zweckmäßig, daß zylinderförmige Vertiefungen die Biegebalken und den Innen- und Randbereich der Membran begrenzen.

Besonders vorteilhaft im Hinblick auf die gewünschte Linearität ist eine Ausgestaltung der Erfindung, bei der die der Membran abgewandte Stirnseite zwischen dem Randbereich und dem Innenbereich liegende Mantelflächen zweier entgegengesetzt angeordneter Kegelstümpfe aufweist, da so nur durch Bearbeitung der Stirnfläche des Meßkörpers die Linearitätseigenschaften und die Genauigkeit insbesondere von Druckaufnehmern für kleine Meßbereiche vorteilhaft beeinflußt werden können.

Dies gilt auch für eine Weiterbildung der Erfindung, bei der die Bodenfläche einer zylindrischen Vertiefung in der den Biegebalken abgewandten Stirnseite Mantelflächen zweier entgegengesetzt angeordneter, Vertiefungen in der Bodenfläche bildender Kegelstümpfe aufweist.

Von Vorteil im Hinblick auf die gewünschten Meßeigenschaften ist ferner eine Ausgestaltung, bei der das Verhältnis von Membrandicke zur Biegebalkenhöhe im Bereich von 1:2 bis 1:10 gewählt ist; besonders günstig ist ein Verhältnis von etwa 1:6.

Eine Abkopplung von Störeinflüssen z. B. durch das Anziehdrehmoment wird mit einer Ausgestaltung erreicht, bei der der Druckanschlußkörper benachbart dem Verbindungsbereich zum Meßkörper eine bis nahe zum Druckmittelkanal reichende Ringnut aufweist.

Dies gilt auch für eine Ausbildung, bei der der zugeordnete Endabschnitt des Druckanschlußkörpers in die zylindrische Vertiefung eingesetzt ist und die Verbindung von Meßkörper und Druckanschlußkörper im Bereich der Mantelflächen von Vertiefung und Endabschnitt vorgenommen ist, da so eine nur auf Scherung beanspruchte Verbindung hergestellt ist, die die Meßeigenschaften nicht nachteilig beeinflußt. Die Verbindung wird vorteilhaft als Schweißverbindung hergestellt.

Ausführungsformen der Erfindung werden im folgenden anhand der Zeichnung näher erläutert.

Es zeigen:
- Fig. 1:: eine perspektivische Teilschnittdarstellung eines erfindungsgemäßen Druckaufnehmers
- Fig. 2:: eine perspektivische Teilschnittdarstellung einer weiteren Ausführungsform des erfindungsgemäßen Druckaufnehmers
Der Druckaufnehmer nach Fig. 1 weist einen Meßkörper 1 auf, der druckdicht mit einem Druckanschlußkörper 2 verbunden ist.

Der Meßkörper 1 weist im wesentlichen eine Membran 3 mit einem verdickten Innenbereich 4, einen verdickten Randbereich 5 und vier auf der Membran 3 angeordnete, Innenbereich 4 und Randbereich 5 speichenartig verbindende Biegebalken 6 auf. Die vier Biegebalken 6 sind kreuzartig auf der Membran 3 angeordnet und weisen einen sich kontinuierlich längs ihrer Erstreckung zwischen Innenbereich 4 und Randbereich 5 ändernden Balkenquerschnitt auf. Dabei haben die Balkenabschnitte, die dem Innenbereich 4 und dem Randbereich 5 benachbart sind, einen größeren Querschnitt als der zwischen ihnen den Mittelabschnitt des Biegebalkens 6 bildende Balkenabschnitt.

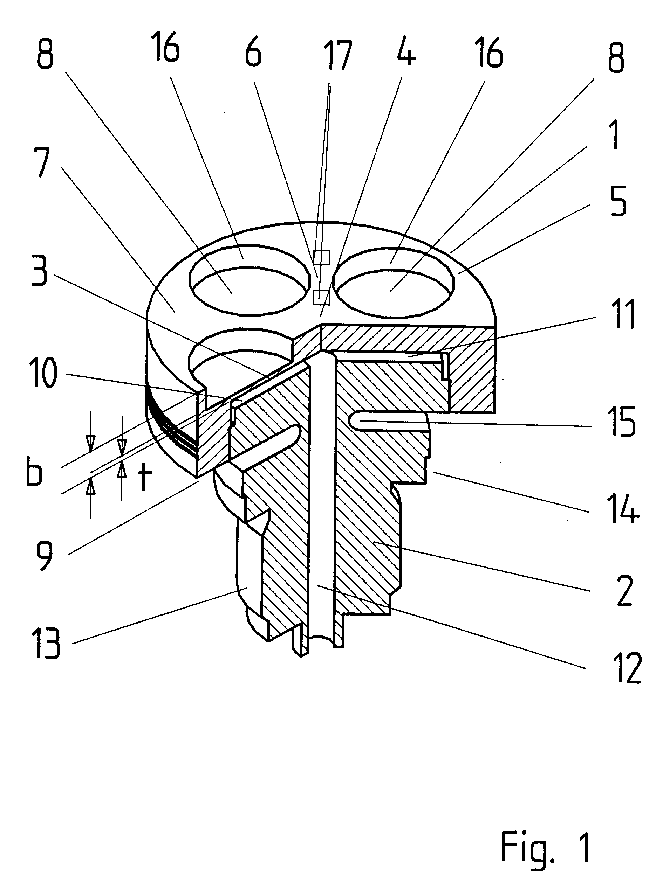

Die Form der Biegebalken 6 ist bei der Ausführungsform nach Fig. 1 dadurch definiert, daß in der Stirnseite 7 vier Kreiszylindrische Vertiefungen 8 vorgesehen sind, von denen jeweils zwei mit ihren Mantelflächen 16 den Querschnitt eines Biegebalkens 6 definieren, dessen Höhe b durch die Tiefe der Vertiefungen 8 bestimmt ist. Statt zylindrischer Vertiefungen 8 können zur Erfüllung vorgegebener Meßeigenschaften auch elliptische, ovale oder ähnlich ausgestaltete scheibenförmige Vertiefungen vorgesehen sein. Durch die Form der Vertiefungen werden neben dem Balkenquerschnitt die Übergangsbereiche des Biegebalkens 6 zu dem Innenbereich 4 und dem Randbereich 5 bestimmt.

Auf der stirnseitigen Oberfläche jedes Biegebalkens 6 sind benachbart zum Innenbereich 4 und zum Randbereich 5 zwei als Dehnungsmeßstreifen ausgebildete Dehnungsmeßfühler 17 angeordnet. In der Fig. 1 sind nur die auf dem hinteren Biegebalken angeordneten Dehnungsmeßfühler dargestellt, während die Dehnungsmeßfühler auf den restlichen Biegebalken aus Gründen der Übersichtlichkeit nicht dargestellt sind. Die auf den vier Biegebalken 6 angeordneten Meßfühler 17 sind elektrisch zu einer Meßbrücke verschaltet.

Auf der der Stirnseite 7 mit den vier Vertiefungen 8 gegenüberliegende Stirnseite 9 des scheibenförmigen Meßkörpers 1 ist eine zylindrische Vertiefung 10 angebracht, deren Durchmesser auf dieser Seite den Randbereich 5 begrenzt und deren Tiefe zusammen mit der Tiefe der zylindrischen Vertiefungen 8 die Membrandicke t bestimmt.

Die zylindrische Vertiefung 10 weist einen Absatz auf, bis zu dem der Druckanschlußkörper 2 in die Vertiefung 10 eingesetzt ist. Die Verbindung von Meßkörper 1 und Druckanschlußkörper 2 ist im Bereich der Mantelflächen z. B. durch Schweißen vorgenommen. Es kann statt einer Schweißverbindung auch eine andere geeignete gebräuchliche Verbindung vorgesehen werden. Zwischen der Stirnseite des Druckanschlußkörpers 2 und der Membran 3 ist eine Kammer 11 definiert, die über einen im Druckanschlußkörper 2 verlaufenden Druckmittelkanal 12 mit dem Medium in Verbindung steht, dessen Druck bestimmt werden soll.

Der Druckanschlußkörper 2 weist einen Gewindeabschnitt 13 zur Befestigung an einem das Medium führenden Körper auf und einen Abschnitt 14 zur Aufbringung eines Drehmoments. Benachbart zum Meßkörper 1 ist der Druckanschlußkörper 2 mit einer Ringnut 15 versehen, die bis nahe zum Druckmittelkanal 12 verläuft.

Weist das Medium in der Kammer 11 einen vom Druck außerhalb des Druckaufnehmers unterschiedlichen Druck auf, so verformen sich Membran 3 und Biegebalken 6 druckabhängig. Die Meßfühler 7 nehmen die druckabhängigen Verformungen auf und liefern Meßsignale, deren Auswertung den zu messenden Druck ergibt.

Der entsprechend Fig. 1 ausgestaltete Meßkörper 1 weist die ausgeprägten Dehnungszonen eines Biegebalkens auf und fungiert gleichzeitig als Meßmembran. Die Membranstärke ist so bemessen, daß eine bestimmte Grenzbeanspruchung sicher ertragen wird.

Durch Veränderung der Biegebalkenhöhe b beispielsweise durch Abdrehen oder Abschleifen der Stirnseite 7 läßt sich die Dehnung der Meßkörperstruktur und somit das auf den zu messenden Druck bezogene Ausgangssignal des Aufnehmers beeinflussen.

Durch die erfindungsgemäßen Variationsmöglichkeiten für das Verhältnis t/b der Membrandicke zur Biegebalkenabmessung und/oder die Formgebung der den Biegebalkenquerschnitt definierenden Vertiefungen 8 läßt sich der Linearitätsfehler des Druckaufnehmers beeinflussen und unter Berücksichtigung der geometrischen Abmessungen des Meßkörpers 1 verschwindend klein halten.

Als besonders günstig hat sich ein Verhältnis der Membrandicke t zur Biegebalkenhöhe b von 0,17 herausgestellt. Die Membrandicke t liegt je nach Meßbereich vorzugsweise zwischen 0,5 und 2 mm.

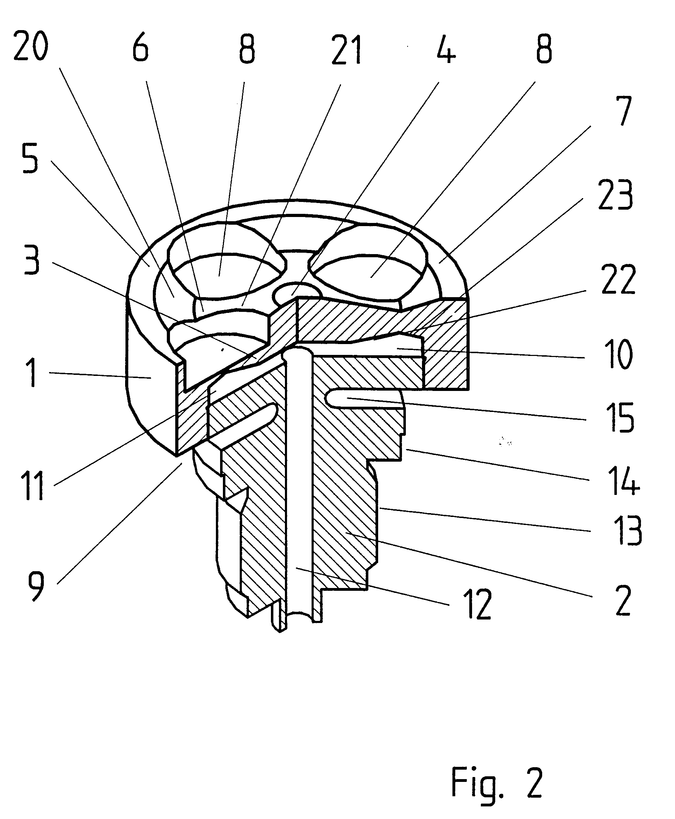

Eine weitere Möglichkeit, den Linearitätsfehler zu beeinflussen, liegt darin, die Biegebalkenoberflächen bzw. die Membranoberfläche nicht als ebene Fläche, sondern profiliert auszubilden. Eine derartige Ausführungsform ist in der Fig. 2 dargestellt.

Der Druckaufnehmer nach Fig. 2 entspricht prinzipiell dem in Fig. 1 dargestellten Druckaufnehmer. Aus Gründen der Übersichtlichkeit dieser Figur sind die auf den vier Biegebalken 6 angeordneten Dehnungsmeßfühler nicht dargestellt. Dieser Druckaufnehmer weist jedoch eine Stirnseite 7 auf, die nicht eben ist, sondern zwischen dem Randbereich 5 und dem Innenbereich 4 sind geneigte Ringflächen vorgesehen, die durch die Mantelflächen 20, 21 zweier entgegengesetzt angeordneter Kegelstümpfe gebildet sind. Die Anordnung ist dabei so getroffen, daß beide Ringflächen 20, 21 zur Biegebalkenmitte hin geneigt sind.

Die zylindrische Vertiefung 10 in der zweiten Stirnseite 9 weist am Boden in ähnlicher Weise zwei zueinander geneigte Ringflächen auf, die durch die Mantelflächen 22, 23 zweier entgegengesetzt angeordneter Kegelstümpfe gebildet sind. Die Anordnung ist dabei so getroffen, daß beide Ringflächen zur Biegebalkenmitte hin geneigt sind.

Bei dieser Ausführungsform läßt sich das Meßverhalten und die Linearität besonders gut an die gestellten Anforderungen anpassen, da hier neben der Anordnung und der Formgebung der vier Vertiefungen 8 bzw. der Formgebung der zylindrischen Vertiefung 10 noch die Formgebungen der Ringflächen 20 bis 23 zur Beeinflussung der Meßeigenschaften herangezogen werden können. Auch die halsartige Einschnürung durch die Ringnut 15 trägt gravierend zur Verbesserung der Meßeigenschaften und der Reproduzierbarkeit der Meßergebnisse bei, da hierdurch äußere Einflüsse, wie z. B. das Anzugsdrehmoment, abgekoppelt sind. Ebenso trägt zur Verbesserung der Meßeigenschaften und der Reproduzierbarkeit der Meßergebnisse die Ausbildung der Verbindung zwischen Meßkörper 1 und Druckanschlußkörper 2 als auf Scherung beanspruchte Verbindung bei, da Biegemomente aufgrund dieser Art der Verbindung zu vernachlässigen sind.

Nicht dargestellt ist eine Ausführungsform der Erfindung, bei der ein zweiter Druckanschlußkörper und eine zweite Kammer vorgesehen sind, die der Membranseite mit dem Biegebalken zugeordnet sind; diese Ausgestaltung ist zur Differenzdruckmessung vorgesehen.

Mit dem erfindungsgemäßen Druckaufnehmer lassen sich Druckmessungen mit hoher absoluter Genauigkeit (ca. 3 x 10⁻⁵), hoher Reproduzierbarkeit, guter Langzeitstabilität und ausgezeichneter Linearität durchführen, so daß der erfindungsgemäße Druckaufnehmer als Kalibrierreferenz zur Kalibrierung von Druckaufnehmern zu verwenden ist.

Die üblicherweise bei der Kalibrierung verwendeten Kalibrierreferenzen in Form von Druckwaagen können entfallen. Bei Druckwaagen werden Gewichte aufgelegt und über einen Druckkolben hydraulisch ein Druck erzeugt. Die Kalibrierung mit Druckwaagen besitzt den Nachteil, daß kein elektrischer Ausgang zum Vergleich mit den zu kalibrierenden Druckaufnehmern vorhanden ist und die Genauigkeit auf 1 bis 3x10⁻⁴ begrenzt ist.

Der erfindungsgemäße Druckaufnehmer liefert ein elektrisches Ausgangssignal, das direkt mit den zu kalibrierenden Druckaufnehmern verglichen werden kann. Dadurch ist es erstmals möglich, eine Vielzahl von Druckaufnehmern gleichzeitig zu kalibrieren, wobei über ein Druckregelventil lediglich ein von 0 bis zum Nenndruck ansteigender Druck durchgefahren wird; dies führt zu erheblichen Kosten- und Zeiteinsparungen.

## Patentansprüche

1. Druckaufnehmer mit einer druckempfindlichen Membran (3) mit einem verdickten Innenbereich (4) und einem verdickten Randbereich (5), zwischen denen mehrere fest mit der Membran (3) verbundene und Dehnungsmeßfühler (17) aufweisende Meßbalken kreuzartig angeordnet sind, dadurch gekennzeichnet, daß die Meßbalken als Biegebalken (6) ausgebildet sind, die einen längs der Erstreckung sich verändernden Balkenquerschnitt mit einem zwischen den dem Innenbereich und dem Randbereich benachbarten Biegbalkenabschnitten mit größerem Querschnitt liegenden Bereich kleinsten Querschnitts aufweisen.

2. Druckaufnehmer nach Anspruch 1, dadurch gekennzeichnet, daß sich der Biegebalkenquerschnitt vom Innenbereich (4) und vom Randbereich (5) aus kontinuierlich verjüngt.

3. Druckaufnehmer nach Anspruch 2, dadurch gekennzeichnet, daß der Querschnitt des Biegebalkens (6) durch Veränderung beider in der Querschnittsebene liegenden Balkenabmessungen definiert wird.

4. Druckaufnehmer nach einem der vorhergehenden Ansprüche, dadurch gekennzeichnet, daß Membran (3) und Biegebalken (6) einteilig als Meßkörper (1) ausgebildet sind.

5. Druckaufnehmer nach Anspruch 4, dadurch gekennzeichnet, daß der Meßkörper (1) im wesentlichen scheibenförmig ist und die kreuzartige Anordnung der Biegebalken (6) durch scheibenförmige Vertiefungen (8) in der der Membran (3) abgewandten Stirnseite (7) ausgebildet sind.

6. Druckaufnehmer nach Anspruch 5, dadurch gekennzeichnet, daß zylinderförmige Vertiefungen (8) die Biegebalken (6) und den Innen- und Randbereich der Membran (3) begrenzen.

7. Druckaufnehmer nach einem der vorhergehenden Ansprüche, dadurch gekennzeichnet, daß die der Membran (3) abgewandte Stirnseite (7) des Meßkörpers (1) zwischen dem Randbereich (5) und dem Innenbereich (4) liegende Mantelflächen (20, 21) zweier entgegengesetzt angeordneter Kegelstümpfe aufweist.

8. Druckaufnehmer nach einem der vorhergehenden Ansprüche, dadurch gekennzeichnet, daß die der Biegebalkenanordnung abgewandte Stirnseite (9) eine zylindrische Vertiefung (10) aufweist.

9. Druckaufnehmer nach Anspruch 8, dadurch gekennzeichnet, daß die Bodenfläche der zylindrischen Vertiefung (10) Mantelflächen (22, 23) zweier entgegengesetzt angeordneter, Vertiefungen in der Bodenfläche bildender Kegelstümpfe aufweist.

10. Druckaufnehmer nach einem der vorhergehenden Ansprüche, dadurch gekennzeichnet, daß das Verhältnis von Membrandicke zu Biegebalkenhöhe im Bereich von 1:2 bis 1:10 liegt.

11. Druckaufnehmer nach Anspruch 10, dadurch gekennzeichnet, daß das Verhältnis von Membrandicke zu Biegebalkenhöhe etwa 1:6 beträgt.

12. Druckaufnehmer nach einem der vorhergehenden Ansprüche, dadurch gekennzeichnet, daß der Meßkörper (1) mit der Stirnseite (9) mit der zylindrischen Vertiefung (10) unter Ausbildung einer Kammer (11) mit einem einen Druckmittelkanal (12) aufweisenden Druckanschlußkörper (2) verbunden ist.

13. Druckaufnehmer nach Anspruch 12, dadurch gekennzeichnet, daß der zugeordnete Endabschnitt des Druckanschlußkörpers (2) in die zylindrische Vertiefung (10) eingesetzt ist und die Verbindung von Meßkörper (1) und Druckanschlußkörper (2) im Bereich der Mantelflächen von Vertiefung (10) und Endabschnitt vorgenommen ist.

14. Druckaufnehmer nach Anspruch 12 oder Anspruch 13, dadurch gekennzeichnet, daß der Druckanschlußkörper (2) benachbart dem Verbindungsbereich zum Meßkörper (1) eine bis nahe zum Druckmittelkanal (12) reichende Ringnut (15) aufweist.

15. Verfahren zur Kalibrierung von Druckaufnehmern mittels einer Kalibrierreferenz, gekennzeichnet durch die Verwendung eines Druckaufnehmers nach Anspruch 1 als Kalibrierreferenz.

## Claims

1. Pressure sensor comprising a pressure-sensitive diaphragm (3) with a thickened inner area (4) and a thickened edge area (5), between which a plurality of measurement beams, which are firmly joined to the diaphragm (3) and comprise strain sensing elements (17), are arranged in cruciform fashion, characterised in that the measurement beams are formed as bending beams (6) with a cross section which varies along the extent and comprise an area of a minimum cross section lying between the bending beam portions of greater cross section which are adjacent to the inner area and the edge area.

2. Pressure sensor according to claim 1, characterised in that the bending beam cross section tapers continuously from the inner area (4) and from the edge area (5).

3. Pressure sensor according to claim 2, characterised in that the cross section of the bending beam (6) is defined by varying both the beam dimensions lying in the cross-sectional plane.

4. Pressure sensor according to any one of the preceding claims, characterised in that the diaphragm (3) and the bending beams (6) are formed in one piece as a measurement element (1).

5. Pressure sensor according to claim 4, characterised in that the measurement element (1) is essentially disc-shaped and the cruciform arrangement of the bending beams (6) is formed by disc-shaped recesses (8) in the end face (7) which is distant from the diaphragm (3).

6. Pressure sensor according to claim 5, characterised in that cylindrical recesses (8) define the bending beams (6) and the inner and edge area of the diaphragm (3).

7. Pressure sensor according to any one of the preceding claims, characterised in that the end face (7) of the measurement element (1) which is distant from the diaphragm (3) comprises surface areas (20, 21), which lie between the edge area (5) and the inner area (4), of two oppositely arranged truncated cones.

8. Pressure sensor according to any one of the preceding claims, characterised in that the end face (9) which is distant from the bending beam arrangement comprises a cylindrical recess (10).

9. Pressure sensor according to claim 8, characterised in that the bottom surface of the cylindrical recess (10) comprises surface areas (22, 23) of two oppositely arranged truncated cones forming recesses in the bottom surface.

10. Pressure sensor according to any one of the preceding claims, characterised in that the ratio of diaphragm thickness to bending beam height ranges from 1:2 to 1:10.

11. Pressure sensor according to claim 10, characterised in that the ratio of diaphragm thickness to bending beam height is approximately 1:6.

12. Pressure sensor according to any one of the preceding claims, characterized in that the measurement element (1) is joined by the end face (9) with the cylindrical recess (10) to a pressure connection element (2) comprising a pressure medium channel (12) so as to form a chamber (11).

13. Pressure sensor according to claim 12, characterised in that the associated end portion of the pressure connection element (2) is inserted in the cylindrical recess (10) and the measurement element (1) and pressure connection element (2) are joined in the vicinity of the surface areas of the recess (10) and the end portion.

14. Pressure sensor according to claim 12 or claim 13, characterised in that the pressure connection element (2) comprises a ring groove (15), which extends almost as far as the pressure medium channel (12), adjacent to the area in which it joins the measurement element (1).

15. Method for calibrating pressure sensors by means of a calibration reference, characterised by the use of a pressure sensor according to claim 1 as calibration reference.

## Revendications

1. Capteur de pression comportant une membrane (3) sensible à la pression avec une zone intérieure (4) surépaissie et une zone de bordure (5) surépaissie, entre lesquelles sont disposées en croix plusieurs barres de mesure solidaires de la membrane (3) et présentant des jauges extensométriques (17), caractérisé en ce que les barres de mesure sont des barres flexibles (6) qui présentent une section transversale, variant le long de leur extension, avec une zone de section minimale située entre les parties de barre de flexion de plus grande section, voisines de la zone intérieure et de la zone de bordure.

2. Capteur de pression selon la revendication 1, caractérisé en ce que la section transversale des barres de flexion diminue en continu à partir de la zone intérieure (4) et de la zone de bordure (5).

3. Capteur de pression selon la revendication 2, caractérisé en ce que la section transversale de la barre de flexion (6) est définie par variation des deux dimensions se situant dans le plan de coupe transversale.

4. Capteur de pression selon l'une des revendications précédentes, caractérise en ce que la membrane (3) et les barres de flexion (6) sont réalisées d'une seule pièce sous la forme d'un corps de mesure (1).

5. Capteur de pression selon la revendication 4, caractérisé en ce que le corps de mesure (1) est essentiellement en forme de disque et la disposition en croix des barres de flexion (6) est formée par des creux (8) en forme de disques pratiqués dans la face frontale (7), tournée à l'opposé de la membrane (3).

6. Capteur de pression selon la revendication 5, caractérisé en ce que des creux (8) cylindriques limitent les barres de flexion (6) et la zone intérieure ainsi que la zone de bordure de la membrane (3).

7. Capteur de pression selon l'une des revendications précédentes, caractérisé en ce que la face frontale (7), tournée à l'opposé de la membrane (3), du corps de mesure (1), présente des surfaces d'enveloppe (20, 21), situées entre la zone de bordure (5) et la zone intérieure (4), de deux troncs de cône dirigés en sens inverse.

8. Capteur de pression selon l'une des revendications précédentes, caractérisé en ce que la face frontale (9), tournée à l'opposé de l'ensemble de barres de flexion, présente un creux cylindrique (10).

9. Capteur de pression selon la revendication 8, caractérisé en ce que la surface de fond du creux cylindrique (10) présente des surfaces d'enveloppe (22, 23) de deux creux, dirigés en sens inverse, pratiqués dans des troncs de cône formant la surface de fond.

10. Capteur de pression selon l'une des revendications précédentes, caractérisé en ce que le rapport entre l'épaisseur de la membrane et la hauteur des barres de flexion se situe entre 1 à 2 et 1 à 10.

11. Capteur de pression selon la revendication 10, caractérisé en ce que le rapport entre l'épaisseur de la membrane et la hauteur des barres de flexion est de 1 à 6 environ.

12. Capteur de pression selon l'une des revendications précédentes, caractérisé en ce que le corps de mesure (1) avec la face frontale (9) et le creux cylindrique (10) est relié, en formant une chambre (11), avec un corps de raccord de pression (2), présentant un canal de fluide sous pression (12).

13. Capteur de pression selon la revendication 12, caractérisé en ce que la partie terminale respective du corps de raccord de pression (2) est insérée dans le creux cylindrique (10) et la liaison entre le corps de mesure (1) et le corps de raccord de pression (2) est assurée dans la zone des surface d'enveloppe du creux (10) et de la partie terminale.

14. Capteur de pression selon la revendication 12 ou la revendication 13, caractérisé en ce que le corps de raccord de pression (2) présente, au voisinage de la zone de liaison avec le corps de mesure (1), une rainure annulaire (15) s'étendant jusqu'à proximité du canal de fluide sous pression (12).

15. Procédé destiné à calibrer des capteurs de pression au moyen d'une référence de calibrage, caractérisé par l'utilisation d'un capteur de pression selon la revendication 1, comme référence de calibrage.
